(19) Europäisches Patentamt
European Patent Office
Office européen des brevets

(11) **EP 4 109 601 A1**

(12) **EUROPEAN PATENT APPLICATION**
published in accordance with Art. 153(4) EPC

(43) Date of publication:
**28.12.2022 Bulletin 2022/52**

(21) Application number: **22759939.6**

(22) Date of filing: **10.02.2022**

(51) International Patent Classification (IPC):
*H01M 4/62* (2006.01)    *H01M 10/42* (2006.01)
*H01M 4/131* (2010.01)    *H01M 10/052* (2010.01)
*C01G 51/00* (2006.01)    *H01M 4/02* (2006.01)

(52) Cooperative Patent Classification (CPC):
**C01G 51/00; H01M 4/02; H01M 4/131; H01M 4/62;
H01M 10/052; H01M 10/42;** Y02E 60/10

(86) International application number:
**PCT/KR2022/002023**

(87) International publication number:
**WO 2022/182021 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.02.2021 KR 20210024259**

(71) Applicant: **LG Energy Solution, Ltd.
Seoul 07335 (KR)**

(72) Inventors:
• **YOO, Tae Gu
Daejeon 34122 (KR)**

• **JUNG, Wang Mo
Daejeon 34122 (KR)**
• **JO, Chi Ho
Daejeon 34122 (KR)**
• **KIM, Ji Hye
Daejeon 34122 (KR)**
• **JUNG, Hae Jung
Daejeon 34122 (KR)**
• **HEO, Jong Wook
Daejeon 34122 (KR)**

(74) Representative: **Hoffmann Eitle
Patent- und Rechtsanwälte PartmbB
Arabellastraße 30
81925 München (DE)**

(54) **SACRIFICIAL POSITIVE ELECTRODE MATERIAL AND LITHIUM SECONDARY BATTERY COMPRISING SAME**

(57)    A sacrificial positive electrode material, a positive electrode comprising the same, and a lithium secondary battery having the positive electrode are disclosed herein. In some embodiments, a sacrificial positive electrode material includes a lithium cobalt oxide represented by the following Chemical Formula 1, wherein the sacrificial positive electrode active material has a defect formation energy of metal (M) of -4.0 to -8.5 eV, calculated using density functional theory (DFT):

[Chemical Formula 1]      $Li_xCo_{(1-y)}M_yO_4$

M is at least one selected from the group consisting of Al, Fe, Zn, Ti, W, Mg, Ge and Si,
x and y are $5 \leq x \leq 7$ and $0.05 \leq y \leq 0.6$. When the defect formation energy of the metal is controlled within a specific range, a high initial charging/discharging efficiency is realized during initial charging/discharging, and the amount of gas additionally generated at the later time of charging/discharging is reduced. Thus, stability and the charging/discharging performance of a battery is improved.

EP 4 109 601 A1

【FIG.1】

**Description**

[Technical Field]

The present invention relates to a sacrificial positive electrode material which is doped with a metal (M) such as Zn, Ge, Mg, or Si and having a metal (M) defect formation energy controlled to a specific level, and a lithium secondary battery including the same.

The present application claims the benefit of priority based on Korean Patent Application No. 10-2021-0024259 dated February 23, 2021, and all contents published in the literature of the Korean patent application are incorporated as a part of this specification.

[Background Art]

In recent years, the demand for secondary batteries as an energy source is rapidly increasing. Among these secondary batteries, a lithium secondary battery having high energy density and voltage, a long cycle life, and a low self-discharge rate has been commercialized and widely used.

Although graphite is mainly used as a negative electrode material of a lithium secondary battery, since graphite has a small capacity per unit mass of 372 mAh/g, it is difficult to increase the capacity of a lithium secondary battery. Accordingly, in order to increase the capacity of a lithium secondary battery, as a non-carbon-based negative electrode material having a higher energy density than graphite, a negative electrode material that forms an intermetallic compound with lithium, such as silicon, tin, and oxides thereof, has been developed and used. However, in the case of such a non-carbon-based negative electrode material, although the capacity is large, the initial efficiency is low, there is a problem that the lithium consumption during the initial charging/discharging is large, and the irreversible capacity loss is large.

In this regard, there has been proposed a method for overcoming the irreversible capacity loss of the negative electrode by using a material that can provide a lithium ion source or reservoir for the positive electrode material and that is electrochemically active after an initial cycle so as not to degrade the overall performance of the battery. Specifically, as a sacrificial positive electrode material or an irreversible additive (or an overdischarging inhibitor), for example, a method of applying an oxide including an excess of lithium, such as $Li_6CoO_4$, to the positive electrode is known.

However, the sacrificial positive electrode material or the irreversible additive has an unstable structure, and may cause oxidation during the activation stage of the battery as well as the subsequent charging/discharging process to generate oxygen gas inside the battery. Oxygen gas thus generated may cause volume expansion and the like, and may be one of the main factors leading to deterioration of battery performance.

Therefore, the development of a sacrificial positive electrode material exhibiting a high charging/discharging capacity is required.

[Related art literature]

Republic of Korea Patent Publication No. 10-2019-0059115

[Disclosure]

[Technical Problem]

Accordingly, an object of the present disclosure is to provide a sacrificial positive electrode material realizing a high initial charging/discharging efficiency while improving the irreversible capacity loss generated in the negative electrode during initial charging/discharging, and reducing the amount of gas additionally generated during charging/discharging thereafter, and a positive electrode and a lithium secondary battery including the same.

[Technical Solution]

In order to solve the above-mentioned problem, in one embodiment, the present disclosure provides a sacrificial positive electrode material including:

a lithium cobalt oxide represented by the following Chemical Formula 1, and
the sacrificial positive electrode material has a defect formation energy of metal (M), calculated using density functional theory (DFT), of -4.0 to -8.5 eV:

[Chemical Formula 1]     $Li_xCo_{(1-y)}M_yO_4$

wherein,

M is at least one selected from the group consisting of Al, Fe, Zn, Ti, W, Mg, Ge, Mn and Si,

x and y are $5 \leq x \leq 7$ and $0.05 \leq y \leq 0.6$.

In this case, in the Chemical Formula 1, M may be at least one selected from the group consisting of Mg, Ge, and Si, and y may be $0.2 \leq y \leq 0.4$.

In addition, the defect formation energy of the metal M according to the density functional theory (DFT) of the sacrificial positive electrode material may be -4.9 to -6.4 eV.

In addition, the sacrificial positive electrode material may have a tetragonal structure with a space group of $P4_2/nmc$.

In addition, the sacrificial positive electrode material may have a powder electrical conductivity of $5 \times 10^{-4}$ S/cm to $1 \times 10^{-2}$ S/cm.

In one embodiment, the present disclosure provides a positive electrode including:

a positive electrode current collector; and

a positive electrode mixture layer containing a positive electrode active material, a conductive material, an organic binder polymer, and a sacrificial positive electrode material on the positive electrode current collector;

the sacrificial positive electrode material includes lithium cobalt oxide represented by the following Chemical Formula 1, and the sacrificial positive electrode material has a defect formation energy of the metal (M), calculated using density functional theory (DFT), of -4.0 to -8.5 eV:

[Chemical Formula 1]        $Li_xCo_{(1-y)}M_yO_4$

wherein,

M is at least one selected from the group consisting of Al, Fe, Zn, Ti, W, Mg, Ge, Mn and Si,

x and y are $5 \leq x \leq 7$ and $0.05 \leq y \leq 0.6$.

Here, the content of the sacrificial positive electrode material may be 0.001 to 5.0 parts by weight based on 100 parts by weight of the positive electrode active material.

In addition, the content of the conductive material may be 0.5 to 10 parts by weight based on 100 parts by weight of the total positive electrode mixture layer.

In addition, the conductive material may include at least one carbon-based material selected from the group consisting of natural graphite, artificial graphite, carbon black, acetylene black, Ketjen black, and carbon fiber.

In addition, the positive electrode active material may include two or more elements selected from the group consisting of nickel (Ni), cobalt (Co), manganese (Mn), aluminum (Al), zinc (Zn), titanium (Ti), magnesium (Mg), chromium (Cr) and zirconium (Zr).

In addition, the average thickness of the positive electrode mixture layer may be 100 $\mu$m to 200 $\mu$m.

In addition, the positive electrode may have a change rate of resistance value of 10% or less after 30 times of charging/discharging compared to the resistance value during initial charging/discharging.

Also, in one embodiment, the present disclosure provides an electrode assembly including the above-described positive electrode.

Furthermore, in one embodiment, the present disclosure provides a lithium secondary battery including the electrode assembly.

[Advantageous Effects]

The sacrificial positive electrode material according to the present disclosure is doped with a specific metal, and a defect formation energy of the metal according to the density functional theory (DFT) is controlled within a specific range, so that it is possible to realize a high initial charging/discharging efficiency during initial charging/discharging and to reduce the amount of gas additionally generated at the later time of charging/discharging, and thus there is an advantage that the effect of improving the stability and the charging/discharging performance of a battery including the positive electrode are excellent.

[Brief Description of the Drawings]

The Figure is a graph showing the initial charging capacity for each type of metal doped into lithium cobalt oxide ($Li_xCoO_4$, $5 \leq x \leq 7$).

[Detailed Description of the Preferred Embodiments]

Since the present disclosure can have various changes and can have various embodiments, specific embodiments will be described in detail in the detailed description.

However, this is not intended to limit the present disclosure to specific embodiments, and it should be understood to include all modifications, equivalents and substitutes included in the spirit and scope of the present disclosure.

In the present disclosure, it is to be understood that the terms "include(s)" or "have(has)" and the like are intended to specify the presence of stated features, numbers, steps, operations, components, components or combinations thereof, but do not preclude the presence or addition of one or more other features or numbers, steps, operations, components and combinations thereof.

Further, in the present disclosure, when a portion of a layer, film, region, plate, etc. is described as being "on" another portion, it includes not only the case where the other portion is "directly on" but also the case where there is another portion therebetween. Conversely, where a portion of a layer, film, region, plate, etc. is described as being "under" another portion, this includes the case where there is another portion therebetween as well as "directly under" the other portion. Also, herein, what is referred to as being disposed "on" may include being disposed not only an upper part but also on a lower part.

Hereinafter, the present disclosure will be described in more detail.

**Sacrificial Positive Electrode Material**

In one embodiment, the present disclosure provides a sacrificial positive electrode material including the following:

lithium cobalt oxide represented by the following Chemical Formula 1, and
the sacrificial positive electrode material has a defect formation energy of metal (M), calculated using density functional theory (DFT), of -4.0 to -8.5 eV:

$$[\text{Chemical Formula 1}] \qquad Li_xCo_{(1-y)}M_yO_4$$

wherein,
M is at least one selected from the group consisting of Al, Fe, Zn, Ti, W, Mg, Ge, Mn and Si,
x and y are $5 \leq x \leq 7$ and $0.05 \leq y \leq 0.6$.

The sacrificial positive electrode material according to the present disclosure includes lithium cobalt metal oxide represented by Chemical Formula 1 as a main component. Here, the "main component" may mean 80 wt% or more, 90 wt% or more, 95 wt% or more, or 97.5 wt% or more, based on the total weight of the sacrificial positive electrode material, and in some cases, when the sacrificial positive electrode material entirely consists of lithium cobalt metal oxide represented by Chemical Formula 1, that is, it may mean 100% by weight.

The lithium cobalt metal oxide represented by Chemical Formula 1 have a structure doped with one or more metals selected from the group consisting of Al, Fe, Zn, Ti, W, Mg, Ge, Mn and Si at the cobalt position of the lithium cobalt oxide ($Li_xCoO_4$, $5 \leq x \leq 7$) emitting a large amount of lithium ions, and specifically, may have a structure doped with one or more metals selected from the group consisting of Mg, Ge, and Si.

At this time, the amount of doping the metal may be a 5 to 60 mole fraction (i.e., $0.05 \leq y \leq 0.6$), specifically, a 10 to 50 mole fraction ($0.1 \leq y \leq 0.5$); a 15 to 50 mole fraction ($0.15 \leq y \leq 0.5$); a 15 to 45 mole fraction ($0.15 \leq y \leq 0.45$); a 20 to 40 mole fraction ($0.2 \leq y \leq 0.4$); or a 25 to 35 mole fraction ($0.25 \leq y \leq 0.35$). In the present disclosure, structural distortion of lithium cobalt oxide can be alleviated by controlling the doping amount of the metal to be within the above molar fraction range, and thus structural stability can be further improved.

In addition, the lithium cobalt metal oxide represented by Chemical Formula 1 may have a tetragonal crystal structure, and among it, may have a space group of $P4_2/nmc$. In general, lithium cobalt metal oxide having a tetragonal crystal structure has a structurally unstable structure due to the distortion of the tetrahedral structure formed by the cobalt element and the oxygen element, and this structural instability causes a problem that gas containing oxygen gas is generated even during charging after activation of the battery. However, in the sacrificial positive electrode material of the present disclosure, at least one metal selected from the group consisting of Al, Fe, Zn, Ti, W, Mg, Ge, Mn and Si is doped at the cobalt position of lithium cobalt oxide ($Li_xCoO_4$, $5 \leq x \leq 7$) to have a doped structure, and thus an effect of reducing the amount of gas generated can be exhibited even if the lithium cobalt metal oxide represented by Formula 1 having a tetragonal crystal form is contained.

In addition, in the sacrificial positive electrode material, the defect formation energy of metal (M) according to density functional theory (DFT) may be controlled to satisfy a specific range. Specifically, the defect formation energy of the metal (M) according to the density functional theory (DFT) of the sacrificial positive electrode material may be -4.0 to -8.5 eV, more specifically -4.0 to -7.0 eV; -4.0 to -6.5 eV; -4.5 to -7.0 eV; -4.9 to -6.4 eV; -5.0 to -6.0 eV; -4.5 to -5.6 eV; -5.0 to -5.5 eV; -5.5 to -5.9 eV; or -6.0 to -6.5 eV. The defect formation energy of the metal (M) refers to the energy required to generate a crystallographic defect due to the metal (M) doped in lithium cobalt oxide ($Li_xCoO_4$, 5<x<7), and in the present disclosure, by controlling the defect formation energy of (M) within the above range, the structural stability of the sacrificial positive electrode material can be improved, and both the amount of gas generated during initial charging/discharging and the amount of cumulative gas generated afterward can be reduced.

In addition, in the sacrificial positive electrode material, the lithium cobalt metal oxide represented by Chemical Formula 1 may have a powder electrical conductivity of $5 \times 10^{-4}$ S/cm to $1 \times 10^{-2}$ S/cm, specifically $5 \times 10^{-4}$ S/cm to $1 \times 10^{-3}$ S/cm; $5 \times 10^{-4}$ S/cm to $1 \times 10^{-2}$ S/cm; $5 \times 10^{-4}$ S/cm to $5 \times 10^{-3}$ S/cm; $8 \times 10^{-4}$ S/cm to $9 \times 10^{-3}$ S/cm; $1 \times 10^{-3}$ S/cm to $8 \times 10^{-3}$ S/cm; $6.0 \times 10^{-3}$ S/cm to $7.5 \times 10^{-3}$ S/cm; or $3.5 \times 10^{-3}$ S/cm to $6.5 \times 10^{-3}$ S/cm. The powder electrical conductivity of the sacrificial positive electrode material can be adjusted according to the amount of metal (M) doped at the cobalt position of lithium cobalt oxide ($Li_xCoO_4$, 5≤x≤7) having a remarkably low powder electric conductivity of $10^{-7}$ S/cm or less, the production conditions of the sacrificial positive electrode material, and the like, and by adjusting the powder electric conductivity within the above range, it is possible to further improve charging/discharging capacity while reducing the amount of gas generated during charging of the battery.

As described above, the sacrificial positive electrode material according to the present disclosure includes lithium cobalt metal oxide represented by Chemical Formula 1 doped with a specific metal, so that it is possible to realize a high initial charging/discharging efficiency at the time of initial charging/discharging and to reduce the amount of gas additionally generated at the later time of charging/discharging, and thus there is an advantage that the effect of improving the stability and the charging/discharging performance of a battery including the positive electrode are excellent.

**Positive Electrode**

In one embodiment, the present disclosure provides a positive electrode including:

a positive electrode current collector; and
a positive electrode mixture layer containing a positive electrode active material, a conductive material, an organic binder polymer, and a sacrificial positive electrode material on the positive electrode current collector, and
the sacrificial positive electrode material includes lithium cobalt oxide represented by the following Chemical Formula 1, wherein the sacrificial positive electrode material has a defect formation energy of the metal (M), calculated using density functional theory (DFT), of - 4.0 to -8.5 eV:

[Chemical Formula 1]          $Li_xCo_{(1-y)}M_yO_4$

wherein,
M is at least one selected from the group consisting of Al, Fe, Zn, Ti, W, Mg, Ge, Mn and Si,
x and y are 5≤x≤7 and 0.05≤y≤0.6.

The positive electrode according to the present disclosure has a structure in which a positive electrode mixture layer is formed on a positive electrode current collector, wherein the positive electrode mixture layer includes the sacrificial positive electrode material of the present disclosure described above together with a positive electrode active material; conductive material; and an organic binder polymer, and the positive electrode has a high charging/discharging capacity, and has an excellent effect of reducing gas, particularly oxygen ($O_2$) gas, generated during charging/discharging of the battery.

Here, the positive electrode active material may be a lithium composite transition metal oxide containing two or more elements selected from the group consisting of nickel (Ni), cobalt (Co), manganese (Mn), aluminum (Al), zinc (Zn), titanium (Ti), magnesium (Mg), chromium (Cr) and zirconium (Zr). For example, the positive electrode active material may include a layered compound such as lithium cobalt oxide ($LiCoO_2$) and lithium nickel oxide ($LiNiO_2$), or a layered compound substituted with one or more transition metals; lithium manganese oxides of the formula $Li_{1+x}Mn_{2-x}O_4$ (wherein x is 0 to 0.33), $LiMnO_3$, $LiMn_2O_3$, $LiMnO_2$, etc.; lithium copper oxides such as $Li_2CuO_2$; vanadium oxides such as $LiV_3O_8$, $Li_3VO_4$, $V_2O_5$, $Cu_2V_2O_7$; Ni site-type lithium nickel oxide represented by the formula $LiNi_{1-x}M_xO_2$ (wherein M = Co, Mn, Al, Cu, Fe, Mg, B or Ga, and x = 0.01 to 0.3); lithium manganese composite oxide represented by the formula $LiMn_{2-x}M_xO_2$ (where M = Co, Ni, Fe, Cr, Zn or Ta, and x = 0.01 to 0.1) or $Li_2Mn_3MO_8$ (where M = Fe, Co, Ni, Cu or Zn); lithium manganese composite oxide having a spinel structure represented by $LiNi_xMn_{2-x}O_4$; $LiMn_2O_4$ in which a part of Li in the formula is substituted with an alkaline earth metal ion; disulfide compounds; $Fe_2(MoO_4)_3$ etc.

In addition, the sacrificial positive electrode material may be included in an amount of 0.001 to 5.0 parts by weight based on 100 parts by weight of the positive electrode active material. More specifically, the sacrificial positive electrode material may be included in an amount of 0.001 to 4.0 parts by weight; 0.001 to 3.0 parts by weight; 0.001 to 2.0 parts by weight; 0.001 to 1.0 parts by weight; 0.01 to 2.0 parts by weight; 0.05 to 2.0 parts by weight; 0.1 to 2.0 parts by weight; or 0.1 to 1.5 parts by weight, based on 100 parts by weight of the positive electrode active material.

In addition, the conductive material may be included in an amount of 1 to 20 parts by weight, specifically, 1 to 10 parts by weight; 1 to 5 parts by weight; 3 to 8 parts by weight; or 2 to 5 parts by weight, based on 100 parts by weight of the positive electrode active material.

In addition, the conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fibers such as carbon fibers and metal fibers; carbon fluoride; metal powders such as aluminum, and nickel powder; conductive whiskers such as zinc oxide and potassium titanate; conductive metal oxides such as titanium oxide; and conductive materials such as polyphenylene derivatives may be used.

In addition, the organic binder polymer is a component that assists in bonding of the active material and the conductive material and bonding to the current collector, and it may be included in an amount of 1 to 20 parts by weight, specifically, 1 to 10 parts by weight; 1 to 5 parts by weight; 3 to 8 parts by weight; or 2 to 5 parts by weight, based on 100 parts by weight of the positive electrode active material.

In addition, examples of the organic binder polymer include polyvinylidene fluoride (PVdF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diether polymer (EPDM), a sulfonated EPDM, styrene-butyrene rubber, fluororubber, various copolymers, etc.

In addition, the positive electrode may further include a filler for suppressing the expansion of the positive electrode in addition to the positive electrode active material, the conductive material, and the organic binder polymer in the positive electrode mixture layer, and the filler is not particularly limited when it is a fibrous material that does not cause a chemical change in the battery. Specifically, as the filler, an olefin-based polymer such as polyethylene or polypropylene; a fibrous material such as glass fiber or carbon fiber may be used.

As one example, the positive electrode mixture layer may include 1 part by weight of a sacrificial positive electrode material ($Li_6Co_{0.7}Zn_{0.3}O_4$) based on 100 parts by weight of lithium nickel cobalt manganese oxide ($LiNi_{0.8}Co_{0.1}Mn_{0.1}O_2$); 5 parts by weight of acetylene black as a conductive material; and 10 parts by weight of a binder (PVdF).

In addition, the average thickness of the positive electrode mixture layer may be 100 $\mu$m to 200 $\mu$m, specifically, 120 $\mu$m to 180 $\mu$m; 140 $\mu$m to 170 $\mu$m; or 150 $\mu$m to 200 $\mu$m.

In addition, the positive electrode mixture layer may be a single layer or may have a multi-layer structure of two or more layers, and in the case of a multi-layer structure of two or more layers, the content of the sacrificial positive electrode material included in the positive electrode mixture layer may be different; the type and/or content of the positive electrode active material, the conductive material, and the binder may be the same or different.

As an example, the positive electrode mixture layer may have a two-layer structure in which a first mixture layer and a second mixture layer are sequentially stacked on a positive electrode current collector, and the first mixture layer may include 1 part by weight of a sacrificial positive electrode material ($Li_6Co_{0.7}Zn_{0.3}O_4$) based on 100 parts by weight of lithium nickel cobalt manganese oxide ($LiNi_{0.8}Co_{0.1}Mn_{0.1}O_2$); 5 parts by weight of acetylene black as a conductive material; and 10 parts by weight of a binder (PVdF) and the second mixture layer may include 2 parts by weight of a sacrificial positive electrode material ($Li_6Co_{0.7}Zn_{0.3}O_4$) based on 100 parts by weight of lithium nickel cobalt manganese oxide ($LiNi_{0.6}Co_{0.2}Mn_{0.2}O_2$); 5 parts by weight of acetylene black as a conductive material; and 9 parts by weight of a binder (PVdF).

Furthermore, when the positive electrode mixture layer has a two-layer structure in which a first mixture layer and a second mixture layer are sequentially stacked on a positive electrode current collector, each layer may satisfy Equation 1 below:

[Equation 1]

$$0.05 \leq SCM_{1st}/SCM_{2nd} \leq 0.9$$

wherein,

$SCM_{1st}$ represents the content of the positive electrode additive contained in the first positive electrode mixture layer, $SCM_{2nd}$ represents the content of the positive electrode additive contained in the second positive electrode mixture layer.

Equation 1 shows the ratio of the positive electrode additive contained in each of the first positive electrode mixture layer and the second positive electrode mixture layer, and the content of the positive electrode additive contained in the second positive electrode mixture layer, that is, the content of lithium cobalt oxide represented by Chemical Formula 1, and means that the content of the positive electrode additive contained in the first positive electrode mixture layer is less than that of the positive electrode additive contained in the second positive electrode mixture layer. The positive electrode mixture layer according to the present disclosure may satisfy Equation 1 above with 0.05 to 0.9 (for example, $0.05 \leq SCM_{1st}/SCM_{2nd} \leq 0.9$), specifically 0.1 to 0.9 (for example, $0.1 \leq SCM_{1st}/SCM_{2nd} \leq 0.9$), 0.2 to 0.8 (for example, $0.2 \leq SCM_{1st}/SCM_{2nd} \leq 0.8$), 0.3 to 0.7 (for example, $0.3 \leq SCM_{1st}/SCM_{2nd} \leq 0.7$), or 0.4 to 0.8 (for example, $0.4 \leq SCM_{1st}/SCM_{2nd} \leq 0.8$). The positive electrode mixture layer according to the present disclosure can further improve the irreversible reaction efficiency of the positive electrode additive during initial charging by satisfying the condition of Equation 1, thereby reducing gas generation through charging/discharging after the initial charging/discharging.

In addition, the positive electrode current collector is not particularly limited as long as it has high conductivity without causing a chemical change in the battery, and for example, stainless steel, aluminum, nickel, titanium, calcined carbon, etc. may be used, and in the case of aluminum or stainless steel, a surface treated with carbon, nickel, titanium, silver, etc. may be used. In addition, fine irregularities may be formed on the surface of the positive electrode current collector to increase the adhesion of the positive electrode active material, and various forms such as a film, a sheet, a foil, a net, a porous body, a foam, and a nonwoven body are possible. In addition, the average thickness of the positive electrode current collector may be appropriately applied in a range of 3 to 500 $\mu$m in consideration of the conductivity and total thickness of the positive electrode to be prepared.

In addition, the positive electrode according to the present disclosure may have excellent electrical performance by including the above configuration. Specifically, the positive electrode may have low electrode resistance at room temperature ($23 \pm 2$ °C), and even after repeated charging/discharging of the battery, the change in resistance of the electrode may be low to improve the lifespan of the battery.

As an example, the positive electrode may have a resistance value change rate of 10% or less after 30 times of charging/discharging compared to the electrode resistance value during initial charging/discharging (for example, activation step). For example, the positive electrode may have an electrode resistance value change rate of 8% or less; 6% or less; 4% or less; or 3% or less after initial charging/discharging and 30 times of charging/discharging.

### Electrode Assembly

Also, in one embodiment, the present disclosure provides an electrode assembly including the above-described positive electrode.

The electrode assembly according to the present disclosure may have a structure including the above-described positive electrode, a negative electrode, and a separation membrane interposed between the positive electrode and the negative electrode, and in some cases, the separation membrane may be excluded.

Here, the negative electrode is manufactured by coating, drying and pressing the negative electrode active material on the negative electrode current collector, and if necessary, the conductive material, organic binder polymer, filler, etc. as described above may be optionally further included.

In addition, as the negative electrode active material, for example, graphite having a completely layered crystal structure such as natural graphite, and soft carbon having a low crystallinity layered crystal structure (graphene structure; a structure in which hexagonal honeycomb planes of carbon are arranged in layers) and graphite materials such as hard carbon, artificial graphite, expanded graphite, carbon fiber, non-graphitizable carbon, carbon black, carbon nanotubes, fullerenes, activated carbon, etc. in which carbon and these structures are mixed with amorphous parts; metal complex oxides such as $Li_xFe_2O_3(0 \leq x \leq 1)$, $Li_xWO_2(0 \leq x \leq 1)$, $Sn_xMe_{1-x}Me'_yO_z$ (Me: Mn, Fe, Pb, Ge; Me', Al, B, P, Si, Group 1 of the periodic table, metal complex oxides such as Group 2 and Group 3 elements and halogens; $0 < x \leq 1$; $1 \leq y \leq 3$; $1 \leq z \leq 8$); lithium metal; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers such as polyacetylene; Li-Co-Ni-based materials; titanium oxide; Lithium titanium oxide and the like, may be used.

In addition, the negative electrode current collector is not particularly limited as long as it has high conductivity without causing a chemical change in the battery, and for example, copper, stainless steel, nickel, titanium, calcined carbon, etc. may be used, and in the case of copper or stainless steel, a surface treated with carbon, nickel, titanium, silver, etc. may be used. In addition, like the positive electrode current collector, fine irregularities may be formed on the surface of the negative electrode current collector to strengthen the adhesion with the negative electrode active material, and various forms such as films, sheets, foils, nets, porous materials, foams, non-woven materials, etc. are possible. In addition, the average thickness of the negative electrode current collector may be appropriately applied in a range of 3 to 500 $\mu$m in consideration of the conductivity and total thickness of the negative electrode to be manufactured.

In addition, the separation membrane is interposed between the negative electrode and the positive electrode, and an insulating thin film having high ion permeability and mechanical strength is used. The separation membrane is not particularly limited as long as it is conventionally used in the art, but specifically, a sheet or nonwoven fabric made of chemical resistant and hydrophobic polypropylene, glass fiber, polyethylene or the like may be used, and in some cases, a composite separation membrane in which inorganic particles/organic particles are coated with an organic binder polymer on a porous polymer substrate such as a sheet or nonwoven fabric may be used. When a solid electrolyte such as a polymer is used as the electrolyte, the solid electrolyte may also serve as a separation membrane. In addition, the separation membrane may have an average pore diameter of 0.01 to 10 $\mu$m, and an average thickness of 5 to 300 $\mu$m.

Meanwhile, the electrode assembly may be wound in the form of a jelly roll and stored in a cylindrical battery, a prismatic battery, or a pouch-type battery, or may be stored in a pouch-type battery in a folding or stack-and-folding form, but is not limited thereto.

**Lithium Secondary Battery**

Furthermore, in one embodiment, the present disclosure provides a lithium secondary battery including the above-mentioned electrode assembly.

The lithium secondary battery according to the present disclosure may have a structure in which the electrode assembly is impregnated with a lithium salt-containing electrolyte.

In this case, the lithium salt-containing electrolyte may consist of an electrolyte and a lithium salt, and as the electrolyte, a non-aqueous organic solvent, an organic solid electrolyte, an inorganic solid electrolyte, and the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, propionic methyl or propionic ethyl, may be used.

As the organic solid electrolyte, for example, polyethylene derivatives, polyethylene oxide derivatives, polypropylene oxide derivatives, phosphoric acid ester polymers, poly alginate lysine, polyester sulfide, polyvinyl alcohol, polyvinylidene fluoride, a polymeric material including an ionic dissociating group and the like may be used.

As the inorganic solid electrolyte, nitrides, halides, sulfates, etc. of Li, such as $Li_3N$, $LiI$, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, may be used.

The lithium salt is a material easily soluble in the non-aqueous electrolyte, and for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylates, lithium 4-phenylboronate, lithium imide and the like may be used.

In addition, for the purpose of improving charging/discharging characteristics, flame retardancy, etc., for example, pyridine, triethylphosphite, triethanolamine, cyclic ether, ethylene diamine, n-glyme, hexamethylphosphate triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride and the like may be added to the electrolyte. In some cases, in order to impart incombustibility, a halogen-containing solvent such as carbon tetrachloride and ethylene trifluoride may be further included, and carbon dioxide gas may be further included to improve high temperature storage characteristics, and fluoro-ethylene carbonate (FEC), propene sultone (PRS), etc. may be further included.

Further, in one embodiment, the present disclosure provides a battery module including the above-described secondary battery as a unit cell, and provides a battery pack including the battery module.

The battery pack may be used as a power source for a medium or large device that requires high temperature stability, long cycle characteristics, and high rate characteristics, and specific examples of the medium or large device include a power tool that is powered by an electric motor; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooter); electric golf carts; and a system for storing power, and more specifically, a hybrid electric vehicle (HEV), but is not limited thereto.

Hereinafter, the present disclosure will be described in detail by way of Examples.

However, the following Examples and Experimental Examples are merely illustrative of the present disclosure, and the content of the present disclosure is not limited to the following Examples and Experimental Examples.

**Examples 1 to 11: Preparation of Sacrificial Positive Electrode Material**

Lithium oxide ($Li_2O$) and cobalt oxide (CoO) and the metal oxide (MO) shown in Table 1 below were input into a reactor, and uniformly dry-mixed for about 30 minutes using a mixer. Then, the prepared raw material mixture was put into an electric furnace and calcined for 10 hours at about $700\pm10°$ C under argon gas (Ar) conditions to obtain lithium

cobalt oxide ($Li_6Co_{1-y}M_yO_4$), a sacrificial positive electrode material.

At this time, the molar ratio of lithium oxide and cobalt oxide input into the reactor was 1:3.0 to 3.03, i) the type of metal oxide (MO) and ii) the molar ratio of cobalt oxide to the metal oxide (MO) are shown in Table 1 below, and for each of the prepared sacrificial materials, ① the defect formation energy of the doped metal (M) and ② the powder electrical conductivity were analyzed.

Specifically, in the case of ① metal (M) defect formation energy, it was calculated using density functional theory (DFT), and the calculation of the density functional theory (DFT) was carried out using the Vienna Ab initio Simulation Package (VASP) as a projector-augmented wave (PAW) method to calculate the structure and energy of atoms and electrons; the electron exchange-correlation function was calculated using the Perdew, Burke, and Ernzerhof (PBE) model method based on generalized gradient approximation (GGA); Kinetic energy cutoff was set to 500 eV; for each metal (M) surface, the 2X2X3 Monkhorst-Pack method was used.

In addition, ② in order to measure the powder electrical conductivity of the sacrificial positive electrode material, each prepared sacrificial positive electrode material was compressed to prepare a powder. Then, the sheet resistance according to the volume and pressure change of each sacrificial positive electrode material was measured using a powder resistance characteristic measuring instrument for the prepared powder by a 4-point probe method, and the powder electrical conductivity of the sacrificial positive electrode material was calculated using the measured volume and input mass. The measured results are shown in Table 1 below.

[Table 1]

|  | Metal oxide (MO) | | Defect formation energy of metal (M) | Powder electrical conductivity |
|---|---|---|---|---|
|  | Type | CoO:MO |  |  |
| Example 1 | $GeO_2$ | 7:3 (y=0.3) | $-5.1\pm0.1$ eV | $6.2\times10^{-3}$ S/cm |
| Example 2 | MgO | 7:3 (y=0.3) | $-5.8\pm0.1$ eV | $7.1\times10^{-3}$ S/cm |
| Example 3 | $SiO_2$ | 7:3 (y=0.3) | $-6.2\pm0.1$ eV | $6.5\times10^{-3}$ S/cm |
| Example 4 | $Al_2O_3$ | 7:3 (y=0.3) | $-6.3\pm0.1$ eV | $5.3\times10^{-3}$ S/cm |
| Example 5 | $Fe_2O_3$ | 7:3 (y=0.3) | $-4.2\pm0.1$ eV | $7.8\times10^{-3}$ S/cm |
| Example 6 | ZnO | 7:3 (y=0.3) | $-4.2\pm0.1$ eV | $6.0\times10^{-3}$ S/cm |
| Example 7 | $TiO_2$ | 7:3 (y=0.3) | $-5.6\pm0.1$ eV | $4.9\times10^{-3}$ S/cm |
| Example 8 | $WO_3$ | 7:3 (y=0.3) | $-8.3\pm0.1$ eV | $4.5\times10^{-3}$ S/cm |
| Example 9 | $MnO_2$ | 7:3 (y=0.3) | $-4.4\pm0.1$ eV | $6.7\times10^{-3}$ S/cm |
| Example 10 | $GeO_2$ | 9:1 (y=0.1) | $-5.1\pm0.1$ eV | $5.3\times10^{-3}$ S/cm |
| Example 11 | $GeO_2$ | 5:5 (y=0.5) | $-5.1\pm0.1$ eV | $5.6\times10^{-3}$ S/cm |

**Comparative Examples 1 to 3: Preparation of Sacrificial Positive Electrode Material**

It was carried out in the same manner as in Example 1, except that i) the type of metal oxide (MO) mixed with lithium oxide ($Li_2O$) and cobalt oxide (CoO) and ii) the molar ratio of cobalt oxide and the metal oxide were adjusted as shown in Table 2 below to obtain lithium cobalt oxide ($Li_6Co_{1-y}M_yO_4$), a sacrificial positive electrode material.

At this time, ① the defect formation energy of the doped metal (M) and ② powder electrical conductivity of the prepared sacrificial positive electrode material were analyzed in the same manner as in Examples, and the results are shown in Table 2 below.

[Table 2]

|  | Metal oxide (MO) | | Defect formation energy of metal (M) | Powder electrical conductivity |
|---|---|---|---|---|
|  | Type | CoO:MO |  |  |
| Comparative Example 1 | - | 10:0 (y=0) | - | $4.3\times10^{-4}$ S/cm |
| Comparative Example 2 | $GeO_2$ | 9.9:0.1 (y=0.01) | $-5.1\pm0.1$ eV | $9.1\times10^{-4}$ S/cm |

(continued)

| | Metal oxide (MO) | | Defect formation energy of metal (M) | Powder electrical conductivity |
|---|---|---|---|---|
| | Type | CoO:MO | | |
| Comparative Example 3 | $GeO_2$ | 3:7 (y=0.7) | -5.1±0.1 eV | $3.7 \times 10^{-3}$ S/cm |

**Experimental Example**

In order to evaluate the performance of the sacrificial positive electrode material prepared in the present disclosure, the following experiment was performed.

A) Initial charging/discharging capacity and efficiency evaluation

An N-methylpyrrolidone solvent was introduced into a homo mixer, and each of the sacrificial positive electrode materials prepared in Examples 1 to 11 and Comparative Examples 1 to 3, an acetylene black conductive material, a modified silanol binder, and a dispersant was added in a weight ratio of 95:3:1.7:0.3 and then mixed at 3,000 rpm for 60 minutes to prepare a pre-dispersion.

The prepared pre-dispersion was mixed with the positive electrode active material so that the content of the sacrificial positive electrode material was 2 parts by weight based on 100 parts by weight of the positive electrode active material ($LiNi_{0.6}Co_{0.2}Mn_{0.2}O_2$), and the positive electrode active material mixed in an N-methylpyrrolidone solvent, PVdF as a binder and carbon black as a conductive material were put into a homo mixer so as to have a weight ratio of 96:1:3, and then dispersed at 3,000 rpm for 80 minutes to prepare a slurry for a positive electrode. The prepared positive electrode slurry was applied to one surface of an aluminum current collector, dried at 100° C, and rolled to manufacture a positive electrode.

A 2032 type coin cell was manufactured using the positive electrode and a lithium metal counter electrode. A separator (thickness: about 16 $\mu$m) made of a porous polyethylene (PE) film was interposed between the positive electrode and the lithium metal counter electrode, and an electrolyte was injected to manufacture a half-cell type coin cell.

In this case, E2DVC was used as the electrolyte. Here, "E2DVC" is a kind of carbonate-based electrolyte, and means a solution obtained by mixing lithium hexafluorophosphate ($LiPF_6$, 1.0M) and vinyl carbonate (VC, 2% by weight) in a mixed solution of ethylene carbonate (EC):dimethyl carbonate (DMC):diethyl carbonate (DEC)=1:1:1 (volume ratio).

For the manufactured coin cell, initial charging/discharging capacity were measured by performing initial charging/discharging (formation) at 25 °C with a reference capacity condition of 200 mAh/200 mAh, and the efficiency was calculated from the measured initial charging/discharging capacity, and thus, the results are shown in Table 3 below.

[Table 3]

| | Initial charging capacity [mAh/g] | Initial discharging capacity [mAh/g] | Initial charging/di schargi ng efficiency [%] |
|---|---|---|---|
| Example 1 | 690.2 | 56.8 | 8.2 |
| Example 2 | 734.4 | 39.9 | 5.4 |
| Example 3 | 513.8 | 25.6 | 5.0 |
| Example 4 | 305.9 | 4.6 | 1.5 |
| Example 5 | 717.4 | 28.6 | 4.0 |
| Example 6 | 717.4 | 28.6 | 4.0 |
| Example 7 | 654.8 | 13.5 | 2.1 |
| Example 8 | 313.0 | 1.83 | 0.6 |
| Example 9 | 718.0 | 27.9 | 3.9 |
| Example 10 | 721.7 | 42.1 | 5.8 |
| Example 11 | 675.3 | 61.8 | 9.2 |
| Comparative Example 1 | 815.7 | 31.1 | 3.8 |

(continued)

| | Initial charging capacity [mAh/g] | Initial discharging capacity [mAh/g] | Initial charging/di schargi ng efficiency [%] |
|---|---|---|---|
| Comparative Example 2 | 807.9 | 32.3 | 4.0 |
| Comparative Example 3 | 630.1 | 62.4 | 9.9 |

As shown in Table 3, it can be seen that the sacrificial positive electrode material according to the present disclosure has a high initial charging capacity during initial charging/discharging and exhibits high initial charging/discharging efficiency.

B) Evaluation of gas generation after initial charging/discharging

The previously used coin cell was repeatedly charged and discharged 50 times under 0.3C/0.3C conditions at 45 °C, and the amount of gas generated during each charging/discharging was measured to calculate the amount of cumulative gas generated after the initial charging/discharging. The results are shown in Table 4 below.

[Table 4]

| | Cumulative gas generation [mL/g] |
|---|---|
| Example 1 | 4.5 |
| Example 2 | 5.3 |
| Example 3 | 6.1 |
| Example 4 | 5.7 |
| Example 5 | 7.1 |
| Example 6 | 6.6 |
| Example 7 | 5.8 |
| Example 8 | 5.1 |
| Example 9 | 4.9 |
| Example 10 | 4.4 |
| Example 11 | 4.1 |
| Comparative Example 1 | 13.0 |
| Comparative Example 2 | 9.7 |
| Comparative Example 3 | 7.8 |

It can be seen that in the case of the sacrificial positive electrode material according to the present disclosure, the amount of gas generated due to charging/discharging after initial charging/discharging is reduced.
Specifically, it can be seen that the sacrificial positive electrode materials of Examples had a low cumulative gas generation amount of 7.5 mL/g or less due to charging/discharging after the initial charging/discharging, but the sacrificial positive electrode materials of Comparative Examples had a high cumulative gas generation amount of 7.5 mL/g or more.
From these results, it can be seen that when the sacrificial positive electrode material according to the present disclosure is doped with a specific metal, and the defect formation energy of the metal according to the density functional theory (DFT) is controlled within a specific range, it is possible to realize a high initial charging/discharging efficiency at the time of initial charging/discharging and to reduce the amount of gas additionally generated at the later time of charging/discharging, there is an advantage that the effect of improving the stability and the charging/discharging performance of a battery including the positive electrode are excellent.
While the foregoing has been described with reference to preferred embodiments of the present disclosure, it should be understood by those skilled in the art or by those of ordinary skill in the art that various changes and modifications can be made therein without departing from the spirit and scope of the disclosure as set forth in the claims that follow.

Accordingly, the technical scope of the present disclosure should not be limited to the content described in the detailed description of the specification, but should be defined by the claims.

## Claims

1. A sacrificial positive electrode material, comprising:
a lithium cobalt oxide represented by the following Chemical Formula 1, wherein the sacrificial positive electrode material has a defect formation energy of metal (M) of -4.0 to -8.5 eV, calculated using density functional theory (DFT):

[Chemical Formula 1]     $Li_xCo_{(1-y)}M_yO_4$

wherein,

M is at least one selected from the group consisting of Al, Fe, Zn, Ti, W, Mg, Ge, Mn and Si,
x and y are $5 \leq x \leq 7$ and $0.05 \leq y \leq 0.6$.

2. The sacrificial positive electrode material of claim 1, wherein M is one or more selected from the group consisting of Mg, Ge, and Si.

3. The sacrificial positive electrode material of claim 1, wherein y in Formula 1 is $0.2 \leq y \leq 0.4$.

4. The sacrificial positive electrode material of claim 1, wherein the defect formation energy of the metal (M) is -4.9 to -6.4 eV.

5. The sacrificial positive electrode material of claim 1, wherein the sacrificial positive electrode active material having a tetragonal structure with a space group of $P4_2/nmc$.

6. The sacrificial positive electrode material of claim 1, the sacrificial positive electrode active material having a powder electrical conductivity of $5 \times 10^{-4}$ S/cm to $1 \times 10^{-2}$ S/cm.

7. A positive electrode comprising:

a positive electrode current collector; and
a positive electrode mixture layer containing a positive electrode active material, a conductive material, an organic binder polymer, and a sacrificial positive electrode material on the positive electrode current collector; the sacrificial positive electrode material comprises lithium cobalt oxide represented by the following Chemical Formula 1, and having a defect formation energy of the metal (M) of - 4.0 to -8.5 eV, calculated using density functional theory (DFT):

[Chemical Formula 1]     $Li_xCo_{(1-y)}M_yO_4$

wherein,

M is one or more selected from the group consisting of Al, Fe, Zn, Ti, W, Mg, Ge, Mn and Si, and
x and y are $5 \leq x \leq 7$ and $0.05 \leq y \leq 0.6$.

8. The positive electrode of claim 7, wherein the content of the sacrificial positive electrode material is 0.001 to 5.0 parts by weight based on 100 parts by weight of the positive electrode active material.

9. The positive electrode of claim 7, wherein the content of the conductive material is 0.5 to 10 parts by weight based on 100 parts by weight of the total positive electrode mixture layer.

10. The positive electrode of claim 7, wherein the conductive material comprises one or more carbon-based materials selected from the group consisting of natural graphite, artificial graphite, carbon black, acetylene black, Ketjen black, and carbon fiber.

**11.** The positive electrode of claim 7, wherein the positive electrode active material is a lithium composite transition metal oxide containing two or more elements selected from the group consisting of nickel (Ni), cobalt (Co), manganese (Mn), aluminum (Al), zinc (Zn), titanium (Ti), magnesium (Mg), chromium (Cr) and zirconium (Zr).

**12.** The positive electrode of claim 7, wherein the average thickness of the positive electrode mixture layer is 100 $\mu$m to 200 $\mu$m.

**13.** An electrode assembly comprising the positive electrode of claim 7.

**14.** A lithium secondary battery comprising the electrode assembly of claim 13.

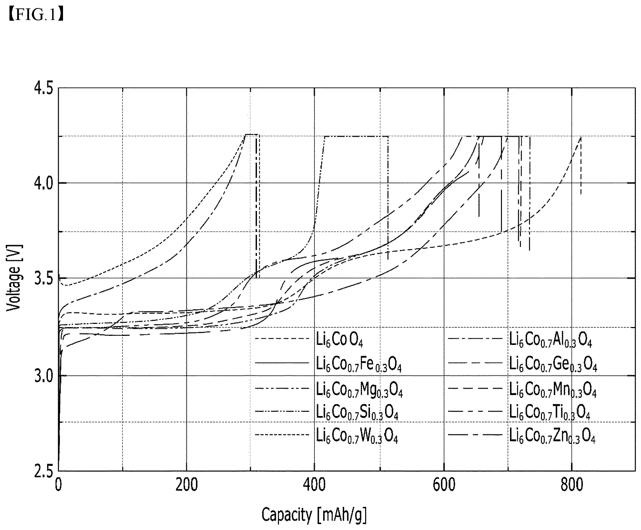

【FIG.1】

## INTERNATIONAL SEARCH REPORT

| International application No. |
|---|
| **PCT/KR2022/002023** |

**A. CLASSIFICATION OF SUBJECT MATTER**

**H01M 4/62**(2006.01)i; **H01M 10/42**(2006.01)i; **H01M 4/131**(2010.01)i; **H01M 10/052**(2010.01)i; **C01G 51/00**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); H01M 10/0525(2010.01); H01M 10/42(2006.01); H01M 4/02(2006.01); H01M 4/48(2010.01); H01M 4/485(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 희생양극재 (sacrificial anode), 리튬 이차 전지 (lithium secondary battery), 리튬코발트 산화물 (lithium cobalt oxide), 양극 (cathod), 밀도범함수 (Density functional theory), 결합형성에너지 (Defect Formation Energy)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0015141 A (DAEGU GYEONGBUK INSTITUTE OF SCIENCE AND TECHNOLOGY) 10 February 2021 (2021-02-10) <br> See abstract; paragraphs [0001], [0005] and [0070]; and claims 1-10. | 1-14 |
| A | JP 2002-319398 A (MATSUSHITA ELECTRIC IND. CO., LTD.) 31 October 2002 (2002-10-31) <br> See entire document. | 1-14 |
| A | KR 10-2013-0079109 A (UNIST ACADEMY-INDUSTRY RESEARCH CORPORATION et al.) 10 July 2013 (2013-07-10) <br> See entire document. | 1-14 |
| A | KR 10-2019-0078392 A (LG CHEM, LTD.) 04 July 2019 (2019-07-04) <br> See entire document. | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 May 2022** | **31 May 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**EP 4 109 601 A1**

INTERNATIONAL SEARCH REPORT

| International application No. |
|---|
| **PCT/KR2022/002023** |

**C. DOCUMENTS CONSIDERED TO BE RELEVANT**

| Category* | Citation of document, with indication, where appropriate, of the relevant passages | Relevant to claim No. |
|---|---|---|
| A | KR 10-1724004 B1 (SAMSUNG SDI CO., LTD.) 06 April 2017 (2017-04-06)<br>See entire document. | 1-14 |

Form PCT/ISA/210 (second sheet) (July 2019)

**INTERNATIONAL SEARCH REPORT**
Information on patent family members

International application No.

**PCT/KR2022/002023**

| Patent document cited in search report | | | Publication date (day/month/year) | Patent family member(s) | | | Publication date (day/month/year) |
|---|---|---|---|---|---|---|---|
| KR | 10-2021-0015141 | A | 10 February 2021 | None | | | |
| JP | 2002-319398 | A | 31 October 2002 | JP | 4910243 | B2 | 04 April 2012 |
| KR | 10-2013-0079109 | A | 10 July 2013 | None | | | |
| KR | 10-2019-0078392 | A | 04 July 2019 | KR | 10-2398571 | B1 | 13 May 2022 |
| KR | 10-1724004 | B1 | 06 April 2017 | KR | 10-2014-0100290 | A | 06 April 2014 |
| | | | | US | 2014-0220455 | A1 | 07 August 2014 |
| | | | | US | 9653726 | B2 | 16 May 2017 |

Form PCT/ISA/210 (patent family annex) (July 2019)

**EP 4 109 601 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210024259

- KR 1020190059115